# EUROPÄISCHE PATENTANMELDUNG

(11) **EP 4 000 798 A1**
(43) Veröffentlichungstag der Anmeldung: **25.05.2022**
(21) Anmeldenummer: 21208005.5
(22) Anmeldetag: 25.07.2019
(51) Int. Cl.: B23P 21/00, B23K 31/02, B62D 65/02, B23K 37/04, B23K 37/047, B23K 101/00, B23K 101/18

(54) **VORRICHTUNG ZUM POSITIONIEREN VON KRAFTFAHRZEUGTEILEN**

(62) Teilanmeldung aus: 19188407.1
(71) Anmelder: Magna Steyr Fahrzeugtechnik AG & Co KG, 8041 Graz (AT)
(72) Erfinder: KRIBERNEGG, Christoph, 8451 Leibnitz (AT); LEONHARDSBERGER, Patrick, 8045 Graz (AT); MAYER, Thomas, 8081 Frannach (AT); PICHLER, Manfred, 8010 Graz (AT)
(74) Vertreter: Zangger, Bernd

(57) **Zusammenfassung**

Eine Vorrichtung zum Positionieren von Kraftfahrzeugteilen zur Produktion von Kraftfahrzeugen, umfassend einen Grundrahmen (1), zumindest ein am Grundrahmen (1) angeordnetes Grundmodul (2), sowie Aufnahmen (3), die dazu ausgebildet sind, die Kraftfahrzeugteile zu halten, wobei die Vorrichtung zumindest eine automatisiert austauschbare Dockingplatte (4) umfasst, wobei die Dockingplatte (4) im Grundmodul (2) fixierbar ist, wobei die Aufnahmen (3) an der Dockingplatte (4) ausgebildet sind, wobei das Grundmodul (2) eine Medienschnittstelle (7) umfasst, wobei dem Grundmodul (2) über die Medienschnittstelle (7) ein Medium zuführbar ist, insbesondere Druckluft und/oder elektrische Signale und/oder Strom, wobei die Vorrichtung zumindest zwei, bevorzugt zumindest drei Grundmodule (2) umfasst und zumindest zwei, bevorzugt zumindest drei, automatisiert austauschbare Dockingplatten (4) umfasst, wobei die Dockingplatten (4) in einem jeweiligen Grundmodul (2) positionsgenau fixierbar sind, wobei an jeder Dockingplatte (4) Aufnahmen (3) ausgebildet sind.

## Beschreibung

### Gebiet der Erfindung

Die vorliegende Erfindung betrifft eine Vorrichtung zum Positionieren von Kraftfahrzeugteilen zur Produktion von Kraftfahrzeugen und ein Verfahren zur wahlweisen Konfiguration einer solchen Vorrichtung für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps.

### Stand der Technik

Die automatisierte Produktion von Kraftfahrzeugen ist heute hinlänglich bekannt. Insbesondere Karosserieteile und/oder Fahrgestellteile werden üblicherweise entlang einer Produktionsstraße in verschiedenen Arbeitsstationen mit weiteren Anbauteilen ausgestattet oder zu größeren Fahrzeugmodulen zusammengesetzt. Dabei ist es zunehmend erforderlich, unterschiedliche Kraftfahrzeugtypen mit möglichst geringem zeitlichem Abstand in den selben Arbeitsstationen herstellen zu können. Für die Herstellung unterschiedlicher Kraftfahrzeugtypen ist üblicherweise ein Umbau der Arbeitsstation erforderlich. Da die Teile unterschiedlicher Kraftfahrzeugtypen meist unterschiedliche Geometrie aufweisen, müssen beispielsweise Positionier- und Haltevorrichtungen für die Kraftfahrzeugteile umgebaut oder ausgewechselt werden.

Die DE 198 20 094 A1 offenbart beispielsweise eine Anlage zum Positionieren und Verschweißen von Karosserieteilen unterschiedlicher Kfz-Typen mit einem auf einer Förderbahn geführten Montagerahmen, der Aufnahmen für zumindest einige Karosserieteile aufweist, mit Positioniereinrichtungen für die Karosserieteile und mit wenigstens einem für Schweißarbeiten einsetzbaren Roboter, wobei der Montagerahmen Positioniereinrichtungen für zumindest einige Karosserieteile und von außen betätigbare Spanneinrichtungen für die Karosserieteile aufweist, wobei unter der Förderbahn eine weitere Förderbahn angeordnet ist, auf der jeweils einer von mehreren Montagehilfsrahmen geführt ist, wobei neben der unteren Förderbahn Parkpositionen für die Montagehilfsrahmen vorgesehen sind, wobei die Montagehilfsrahmen jeweils Aufnahmen für weitere Karosserieteile unterschiedlicher Kfz-Typen sowie Einrichtungen zum Positionieren und Verspannen mit dem Montagerahmen aufweisen und wobei eine Hubvorrichtung für den Montagehilfsrahmen vorgesehen ist.

### Zusammenfassung der Erfindung

Es ist eine Aufgabe der Erfindung, eine Vorrichtung zum Positionieren von Kraftfahrzeugteilen zur Produktion von Kraftfahrzeugen anzugeben, die eine einfache und rasche Umstellung auf verschiedene Fahrzeugtypen erlaubt und ein Verfahren zur wahlweisen Konfiguration einer solchen Vorrichtung für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps.

Die Lösung der Aufgabe erfolgt durch eine Vorrichtung zum Positionieren von Kraftfahrzeugteilen zur Produktion von Kraftfahrzeugen mit den Merkmalen gemäß Anspruch 1.

Die Vorrichtung umfasst einen Grundrahmen, zumindest ein am Grundrahmen angeordnetes Grundmodul, sowie Aufnahmen, die dazu ausgebildet sind, die Kraftfahrzeugteile zu halten, wobei die Vorrichtung zumindest eine austauschbare Dockingplatte umfasst, wobei die Dockingplatte im Grundmodul fixierbar ist, wobei die Aufnahmen an der Dockingplatte ausgebildet sind.

Erfindungsgemäß erfolgt das Halten von Kraftfahrzeugteilen zur weiteren Bearbeitung mittels Aufnahmen, die üblicherweise genau auf die aufzunehmenden Kraftfahrzeugteile abgestimmt sind und somit kraftfahrzeugtypabhängig ausgebildet sind. Diese Aufnahmen werden aber nicht direkt beispielsweise an einen Rahmen einer Arbeitsstation bzw. Vorrichtung befestigt, sondern vielmehr an einer austauschbaren Dockingplatte, also einem im wesentlichen plattenförmigen Element, das auf einfache Weise, nämlich automatisiert, insbesondere mittels Greifsystemen bzw. Robotern, in einem Grundmodul fixierbar ist, befestigt. Zur Herstellung eines unterschiedlichen Kraftfahrzeugtyps kann daher auf einfache Weise und automatisiert die Dockingplatte der Vorrichtung gewechselt werden, so dass auch neue, passende Aufnahmen für die neuen Kraftfahrzeugteile bereitgestellt werden.

Erfindungsgemäß umfasst das Grundmodul eine Medienschnittstelle, wobei dem Grundmodul über die Medienschnittstelle ein Medium zuführbar ist, insbesondere Druckluft und/oder elektrische Signale und/oder Strom. Die Druckluft kann dazu dienen, um die an der Dockingplatte befindlichen Einzugspannbolzen am Grundmodul, insbesondere am Nullpunktsystem zu arretieren. Die Übertragung von Strom und / oder elektrischer Signale in das Grundmodul kann auch induktiv erfolgen.

Erfindungsgemäß umfasst die Vorrichtung zumindest zwei, bevorzugt zumindest drei Grundmodule und zumindest zwei, bevorzugt zumindest drei, automatisiert austauschbare Dockingplatten, wobei die Dockingplatten in einem jeweiligen Grundmodul positionsgenau fixierbar oder fixiert sind, wobei an jeder Dockingplatte Aufnahmen ausgebildet sind. In einem Grundrahmen können somit mehrere Grundmodule zur gleichzeitigen Fixierung mehrerer Dockingplatten ausgebildet sein.

Bevorzugt ist die Dockingplatte im Grundmodul positionsgenau und / oder toleranzgenau fixierbar bzw. fixiert.

Bevorzugt umfasst die Dockingplatte Bolzen, insbesondere Einzugsspannbolzen, wobei die Dockingplatte mittels der Bolzen im Grundmodul positionsgenau fixiert ist. Besonders bevorzugt umfasst die Dockingplatte zwei oder vier Bolzen bzw. Einzugsspannbolzen, die insbesondere im Bereich der Ecken einer viereckigen Dockingplatte angebracht sein können. Die Bolzen sind bevorzugt in Verwendungslage an der Unterseite der Dockingplatte ausgebildet und stehen bevorzugt vertikal nach unten ab.

Das Grundmodul umfasst vorzugsweise zumindest eine Spannvorrichtung, besonders bevorzugt eine Nullpunktspannvorrichtung und /oder eine Verriegelungseinrichtung, die dazu ausgebildet ist Bolzen, insbesondere Einzugsspannbolzen, einzuspannen und / oder auf sonstige Weise die Dockingplatte auf dem Grundmodul zu fixieren und/oder zu verriegeln. Bevorzugt bildet das Grundmodul ein sogenanntes Nullpunktspannsystem und / oder Nullpunktverriegelungssystem zur positionsgenauen und / oder toleranzgenauen Aufnahme einer Dockingplatte aus.

Ein an einem Grundrahmen fix montiertes Grundmodul mit ein oder mehreren Nullpunktspannvorrichtungen und zumindest einer am Grundmodul tauschbaren bzw. lösbaren Dockingplatte kann zusammen ein "Dockingmodul" bilden.

Die Aufnahmen können Auflagen, Konsolen und/oder Spanner umfassen. Die Aufnahmen können insbesondere kraftfahrzeugtypspezifisch ausgebildet sein. Die Aufnahmen können als getrennte Bauteile ausgebildet sein und an der Dockingplatte befestigt, insbesondere lösbar und auswechselbar, befestigt sein.

Bevorzugt umfasst die Dockingplatte Halteelemente, beispielsweise Bolzen, Spannbolzen oder ähnliche Elemente, die dazu ausgebildet sind, dass die Dockingplatte mittels eines an den Haltelementen angreifenden Greifsystems an dem Grundmodul positioniert werden kann und/oder vom Grundmodul entfernt werden kann.

Die Vorrichtung umfasst vorzugsweise zumindest ein Greifsystem, insbesondere einen Roboter, wobei das Greifsystem dazu ausgebildet ist, die Dockingplatte an dem Grundmodul zu positionieren und/oder vom Grundmodul zu entfernen. Die Dockingplatte wird vorzugsweise vom Greifsystem, insbesondere Roboter, aus einem Lager geholt um am Grundmodul angebracht zu werden und nach dem Entfernen vom Grundmodul vom Greifsystem in einem Lager abgestellt.

Bevorzugt umfasst die Vorrichtung zumindest eine weitere automatisiert austauschbare Dockingplatte, wobei die weitere Dockingplatte im selben Grundmodul positionsgenau fixierbar ist, in welchem die Dockingplatte fixierbar ist, wobei weitere Aufnahmen an der weiteren Dockingplatte ausgebildet sind und wobei die weiteren Aufnahmen der weiteren Dockingplatte verschieden von den Aufnahmen der Dockingplatte ausgebildet sind. In einem Grundmodul sind daher zwei verschieden ausgebildete Dockingplatten fixierbar. Die verschiedenen Dockingplatten können zur Herstellung verschiedener Fahrzeugtypen verwendet werden. Der Grundrahmen und die Grundmodule müssen dafür nicht getauscht werden.

Ein Verfahren zur wahlweisen Konfiguration einer Vorrichtung wie oben beschrieben, für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps, umfasst die Schritte, dass das Grundmodul zur Produktion von Kraftfahrzeugen des ersten Kraftfahrzeugtyps automatisiert mit einer Dockingplatte ausgestattet wird, wobei an der Dockingplatte Aufnahmen ausgebildet sind, die dazu ausgebildet sind, Kraftfahrzeugteile eines Kraftfahrzeugs des ersten Kraftfahrzeugtyps zu halten, und dass das Grundmodul zur Produktion von Kraftfahrzeugen des zweiten Kraftfahrzeugtyps automatisiert mit einer weiteren Dockingplatte ausgestattet wird, wobei an der weiteren Dockingplatte weitere Aufnahmen ausgebildet sind, die dazu ausgebildet sind, Kraftfahrzeugteile eines Kraftfahrzeugs des zweiten Kraftfahrzeugtyps zu halten.

Zur Neukonfiguration einer erfindungsgemäßen Vorrichtung, zur Herstellung eines anderen Kraftfahrzeugtypes, können daher Grundrahmen und Grundmodule weiter verwendet werden und lediglich die eingespannten Dockingplatten mit ihren fahrzeugtypspezifischen Aufnahmen werden ausgetauscht.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung einer erfindungsgemäßen Vorrichtung zum Positionieren von Kraftfahrzeugteilen.
- Fig. 2: ist eine dreidimensionale Darstellung eines Grundmoduls und einer Dockingplatte der Vorrichtung gemäß Fig. 1 von oben.
- Fig. 3: ist eine dreidimensionale Darstellung einer Dockingplatte der Vorrichtung gemäß Fig. 1 von unten, ohne Aufnahmen.
- Fig. 4: ist eine dreidimensionale Darstellung einer Dockingplatte der Vorrichtung gemäß Fig. 1 von unten, mit Aufnahmen.

### Detaillierte Beschreibung der Erfindung

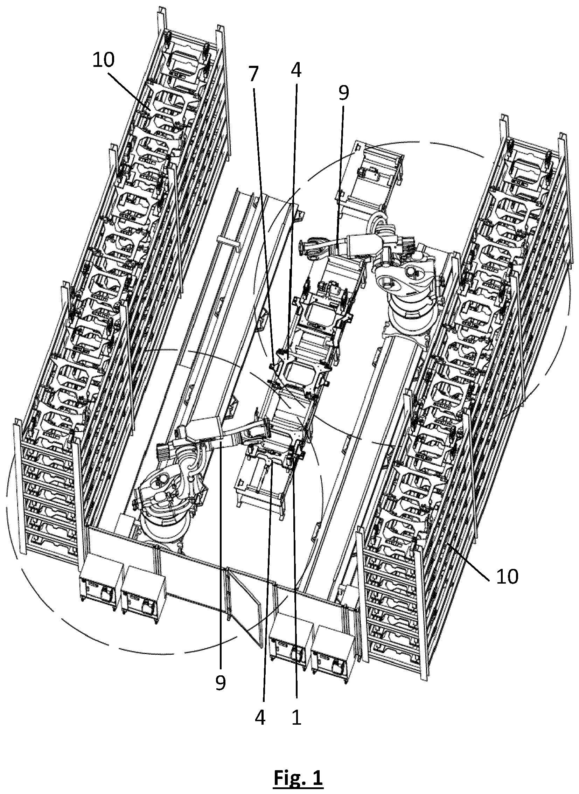

In Fig. 1 ist eine erfindungsgemäße Vorrichtung zum Positionieren von Kraftfahrzeugteilen zur Produktion von Kraftfahrzeugen dargestellt.

Die Kraftfahrzeugteile können auf Dockingplatten 4 positioniert werden, zur weiteren Bearbeitung, insbesondere zur Ausstattung mit zusätzlichen Komponenten des herzustellenden Kraftfahrzeuges.

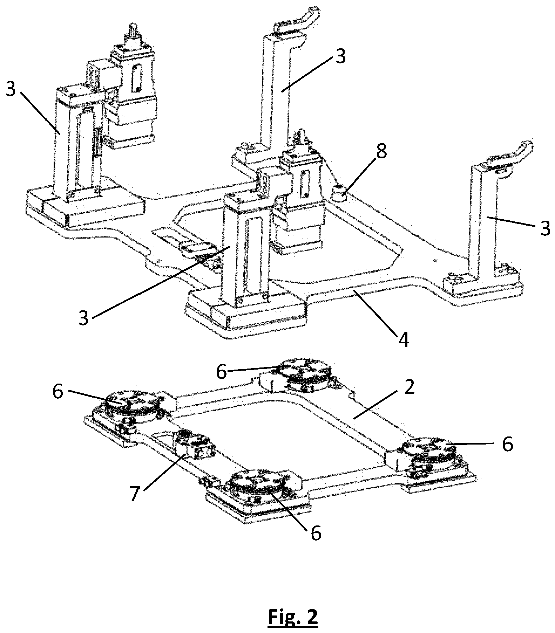

Mehrere Dockingplatten 4 können an einem gemeinsamen Grundrahmen 1, auf Grundmodulen 2 (dargestellt in Fig. 2), aufgenommen werden. Die Grundmodule 2 und die Dockingplatten 4 weisen eine flache Form auf. Von oben betrachtet weisen Grundmodule 2 und Dockingplatten 4 eine rechteckige oder quadratische Form auf. Insbesondere können Grundmodule 2 und Dockingplatten 4 im Wesentlichen einen rechteckigen oder quadratischen Rahmen bilden, wobei der Rahmen einer Dockingplatte 4 im Wesentlichen auf den Rahmen eines Grundmoduls 2 passt.

Die Dockingplatten 4 werden in einem Lager 10, beispielsweise seitlich des Grundrahmens 1, bereitgehalten und können durch Greifsysteme 9, insbesondere an Robotern, aus ihrem Platz im Lager 10 entnommen und auf den Grundmodulen 2 positioniert werden, zur Bereitstellung geeigneter Aufnahmen 3 (dargestellt in Fig. 2) zur Herstellung eines bestimmten Fahrzeugtyps.

Die Vorrichtung umfasst somit einen Grundrahmen 1, mehrere am Grundrahmen 1 angeordnete Grundmodule 2, sowie automatisiert austauschbare Dockingplatten 4, wobei die Dockingplatten 4 in den Grundmodulen 2 positionsgenau fixiert werden können. Bevorzugt weisen alle Grundmodule 2 und alle Dockingplatten 4 die selben Dimensionen auf, so dass alle Dockingplatten 4 beliebig auf allen Grundmodulen 2 fixiert werden können.

Wie in Fig. 2 dargestellt, sind an den Dockingplatten jeweils mehrere, beispielsweise jeweils vier Aufnahmen 3 ausgebildet, um mittels der Aufnahmen 3 Kraftfahrzeugteile in einer vorgegebenen Position halten zu können. Die Aufnahmen 3 können Auflagen, Konsolen und/oder Spanner und / oder ein-/ausziehbare Positionierstifte umfassen.

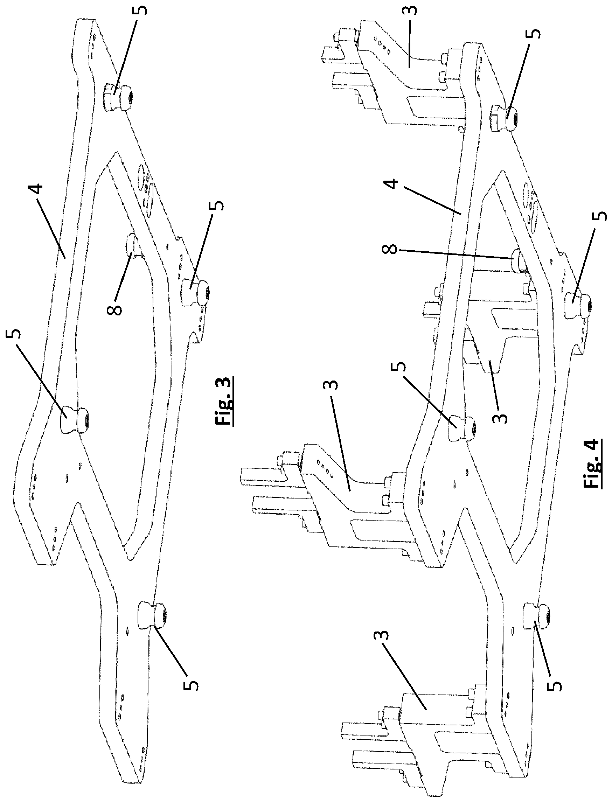

Wie in Fig. 3 und Fig. 4 gut ersichtlich, weist eine Dockingplatte 4 an ihrer Unterseite Bolzen 5 auf, insbesondere jeweils vier Einzugsspannbolzen, sodass die Dockingplatte 4 mittels der Bolzen 5 in einem Grundmodul 2 positionsgenau fixiert werden kann.

Ein Grundmodul 2 weist daher, wie in Fig. 2 dargestellt, vier entsprechend positionierte Spannvorrichtungen 6 auf, insbesondere Nullpunktspannvorrichtungen, die dazu ausgebildet sind, die Bolzen 5, insbesondere Einzugsspannbolzen, einer Dockingplatte 4 einzuspannen. Das Grundmodul 2 bildet hierdurch bevorzugt ein Nullpunktspannsystem aus.

Ein Grundmodul 2 kann eine Medienschnittstelle 7 umfassen, wobei dem Grundmodul 2 über die Medienschnittstelle 7 ein Medium zuführbar ist, insbesondere Druckluft und/oder elektrische Signale und/oder Strom. Die Druckluft kann beispielsweise dazu dienen, um an der Dockingplatte 4 befindliche Einzugspannbolzen 5 mittels Spannvorrichtungen 6, vorzugsweise Nullpunktspannvorrichtungen, am Nullpunktsystem bzw. am Grundmodul 2 zu arretieren.

Eine Dockingplatte 4 umfasst auch Halteelemente 8, beispielsweise wieder Bolzen, Spannbolzen, oder dergleichen, wobei die Halteelemente vorzugsweise an der Oberseite der Dockingplatten 4 angeordnet sind. Die Halteelemente 8 sind dazu ausgebildet, dass die Dockingplatten 4 mittels eines an den Haltelementen 8 angreifenden Greifsystems 9 (Fig. 1) an dem Grundmodul 2 positioniert werden können und/oder vom Grundmodul 2 entfernt werden können.

Zur wahlweisen Konfiguration einer solchen Vorrichtung für das Positionieren von Kraftfahrzeugteilen zur Produktion von Kraftfahrzeugen eines ersten Kraftfahrzeugtyps, wird ein Grundmodul 2 automatisiert, bevorzugt mittels Greifsystem 9, mit einer Dockingplatte 4 ausgestattet, wobei an der Dockingplatte 4 Aufnahmen 3 ausgebildet sind, die dazu ausgebildet sind, Kraftfahrzeugteile eines Kraftfahrzeugs des ersten Kraftfahrzeugtyps zu halten.

Zur wahlweisen Konfiguration einer solchen Vorrichtung für das Positionieren von Kraftfahrzeugteilen zur Produktion von Kraftfahrzeugen eines zweiten Kraftfahrzeugtyps, wird das Grundmodul 2 automatisiert, bevorzugt mittels Greifsystem 9, mit einer weiteren, also anderen Dockingplatte 4 ausgestattet, wobei an der weiteren Dockingplatte 4 weitere Aufnahmen 3 ausgebildet sind, die dazu ausgebildet sind, Kraftfahrzeugteile eines Kraftfahrzeugs des zweiten Kraftfahrzeugtyps zu halten. Die weiteren Aufnahmen 3 sind also zumindest teilweise verschieden von den Aufnahmen 3, so dass nur andere Kraftfahrzeugteile bzw. Kraftfahrzeugteile auf andere Weise positioniert werden können, um einen anderen Kraftfahrzeugtyp herzustellen.

### Bezugszeichenliste

- 1: Grundrahmen
- 2: Grundmodul
- 3: Aufnahme
- 4: Dockingplatte
- 5: Bolzen
- 6: Spannvorrichtung
- 7: Medienschnittstelle
- 8: Haltelement
- 9: Greifsystem
- 10: Lager

## Patentansprüche

1. Vorrichtung zum Positionieren von Kraftfahrzeugteilen zur Produktion von Kraftfahrzeugen, umfassend einen Grundrahmen (1), zumindest ein am Grundrahmen (1) angeordnetes Grundmodul (2), sowie Aufnahmen (3), die dazu ausgebildet sind, die Kraftfahrzeugteile zu halten, wobei die Vorrichtung zumindest eine automatisiert austauschbare Dockingplatte (4) umfasst, wobei die Dockingplatte (4) im Grundmodul (2) fixierbar ist, wobei die Aufnahmen (3) an der Dockingplatte (4) ausgebildet sind, **dadurch gekennzeichnet , dass** das Grundmodul (2) eine Medienschnittstelle (7) umfasst, wobei dem Grundmodul (2) über die Medienschnittstelle (7) ein Medium zuführbar ist, insbesondere Druckluft und/oder elektrische Signale und/oder Strom, wobei die Vorrichtung zumindest zwei, bevorzugt zumindest drei Grundmodule (2) umfasst und zumindest zwei, bevorzugt zumindest drei, automatisiert austauschbare Dockingplatten (4) umfasst, wobei die Dockingplatten (4) in einem jeweiligen Grundmodul (2) positionsgenau fixierbar sind, wobei an jeder Dockingplatte (4) Aufnahmen (3) ausgebildet sind.

2. Vorrichtung nach Anspruch 1,
**dadurch gekennzeichnet , dass** die Dockingplatte (4) im Grundmodul (2) positionsgenau und / oder toleranzgenau fixierbar ist.

3. Vorrichtung nach zumindest einem der vorhergehenden Ansprüche,
**dadurch gekennzeichnet , dass** die Dockingplatte (4) Bolzen (5), insbesondere Einzugsspannbolzen, umfasst, wobei die Dockingplatte (4) mittels der Bolzen (5) im Grundmodul (2) positionsgenau fixierbar ist.

4. Vorrichtung nach zumindest einem der vorhergehenden Ansprüche,
**dadurch gekennzeichnet , dass** das Grundmodul (2) zumindest eine Spannvorrichtung (6), vorzugsweise zumindest eine Nullpunktspannvorrichtung, umfasst, die dazu ausgebildet ist, eine Dockingplatte (4) zu fixieren und/oder zu verriegeln, insbesondere zumindest einen Bolzen (5) einer Dockingplatte (4) einzuspannen.

5. Vorrichtung nach zumindest einem der vorhergehenden Ansprüche,
**dadurch gekennzeichnet , dass** die Aufnahmen (3) Auflagen, Konsolen und/oder Spanner umfassen.

6. Vorrichtung nach zumindest einem der vorhergehenden Ansprüche,
**dadurch gekennzeichnet , dass** die Dockingplatte (4) Halteelemente (8) umfasst, die dazu ausgebildet sind, dass die Dockingplatte (4) mittels eines an den Haltelementen (8) angreifenden Greifsystems (9) an dem Grundmodul (2) positioniert werden kann und/oder vom Grundmodul (2) entfernt werden kann.

7. Vorrichtung nach zumindest einem der vorhergehenden Ansprüche,
**dadurch gekennzeichnet , dass** die Vorrichtung zumindest ein Greifsystem (9), insbesondere einen Roboter, umfasst, wobei das Greifsystem (9) dazu ausgebildet ist, die Dockingplatte (4) an dem Grundmodul (2) zu positionieren und/oder vom Grundmodul (2) zu entfernen.

8. Vorrichtung nach zumindest einem der vorhergehenden Ansprüche, **dadurch gekennzeichnet , dass** die Vorrichtung zumindest eine weitere automatisiert austauschbare Dockingplatte (4) umfasst, wobei die weitere Dockingplatte (4) im selben Grundmodul (2) positionsgenau fixierbar ist, in welchem die Dockingplatte (4) fixierbar ist, wobei weitere Aufnahmen (3) an der weiteren Dockingplatte (4) ausgebildet sind und wobei die weiteren Aufnahmen (3) der weiteren Dockingplatte (4) verschieden von den Aufnahmen (3) der Dockingplatte (4) ausgebildet sind.

9. Verfahren zur wahlweisen Konfiguration einer Vorrichtung nach zumindest einem der vorhergehenden Ansprüche für das Positionieren von Kraftfahrzeugteilen zur Produktion von Kraftfahrzeugen eines ersten Kraftfahrzeugtyps und zur Produktion von Kraftfahrzeugen eines zweiten Kraftfahrzeugtyps, wobei das Grundmodul (2) zur Produktion von Kraftfahrzeugen des ersten Kraftfahrzeugtyps automatisiert mit einer Dockingplatte (4) ausgestattet wird, wobei an der Dockingplatte (4) Aufnahmen (3) ausgebildet sind, die dazu ausgebildet sind, Kraftfahrzeugteile eines Kraftfahrzeugs des ersten Kraftfahrzeugtyps zu halten, wobei das Grundmodul (2) zur Produktion von Kraftfahrzeugen des zweiten Kraftfahrzeugtyps automatisiert mit einer weiteren Dockingplatte (4) ausgestattet wird, wobei an der weiteren Dockingplatte (4) weitere Aufnahmen (3) ausgebildet sind, die dazu ausgebildet sind, Kraftfahrzeugteile eines Kraftfahrzeugs des zweiten Kraftfahrzeugtyps zu halten.
